# FASCICULE DE BREVET EUROPEEN

(11) **EP 2 799 721 B1**
(45) Date de publication et mention de la délivrance du brevet: **07.09.2016**
(21) Numéro de dépôt: 13166527.5
(22) Date de dépôt: 03.05.2013
(51) Int. Cl.: F04D 29/54, F01D 5/14, F01D 9/04, F04D 29/68

(54) **REDRESSEUR DE TURBOMACHINE AXIALE AVEC AUBES AUXILIAIRES EN PIEDS D'AUBES**
LEITSCHAUFELANORDNUNG EINER AXIALEN TURBOMASCHINE MIT HILFSFLÜGELN AN DEN LAUFRADSCHAUFELSFÜßEN
AXIAL TURBOMACHINE STATOR GUIDE WITH AUXILIARY VANES ON THE VANE FEET

(43) Date de publication de la demande: 05.11.2014
(73) Titulaire: SAFRAN AERO BOOSTER S.A., 4041 Herstal (BE)
(72) Inventeur: Derclaye, Alain, 4218 Couthuin (BE); Depaepe, David, 4000 Liege (BE)
(74) Mandataire: Lecomte & Partners

(56) Documents cités:
- EP-A2- 1 122 407
- EP-B1- 1 927 723
- FR-A1- 2 939 852
- GB-A- 1 299 686
- JP-A- 2001 027 103
- US-A- 3 039 736
- US-A1- 2012 243 983

## Description

### Domaine technique

L'invention a trait à un redresseur de compresseur axial. Plus particulièrement, l'invention a trait à un redresseur de turbomachine comprenant des aubes principales et des aubes auxiliaires associées aux aubes principales. L'invention a trait également à une turbomachine axiale munie d'un redresseur selon l'invention.

### Technique antérieure

Afin de redresser leurs flux annulaires, les turbomachines axiales présentent des redresseurs. Ces grilles d'aubes sont disposées en aval de chaque rangée annulaire d'aubes rotoriques. Elles dévient un flux annulaire de sorte à transformer sa composante tangentielle en une composante axiale. Ce flux devient apte à être à nouveau accéléré par une autre rangée annulaire d'aubes rotoriques placée en aval.

Un redresseur présente généralement une virole interne et une virole externe entre lesquelles s'étendent radialement les aubes statoriques. En fonctionnement, le flux annulaire peut se décoller des aubes, créant au passage de l'entropie qui réduit le rendement de la turbomachine.

Le document FR 2 939 852 A1 divulgue un redresseur aubagé pourvu d'aubes intermédiaires. Celles-ci peuvent être portées par une virole interne ou une virole externe. Leurs dimensions sont inférieures à celles des aubes statoriques et elles sont disposées dans la partie aval du redresseur, en retrait par rapport aux aubes principales. Cette architecture de redresseur est destinée à réduire les décollements au niveau de la virole. Or, des décollements peuvent encore survenir du côté extrados des aubes. Ils provoquent des tourbillons qui réduisent davantage le rendement de la turbomachine.

Le document EP 1927 723 B1 divulgue un étage de stator de compresseur axial d'une turbomachine. Une série de lamelles est disposée du côté extrados de chacune des aubes. Les lamelles permettent de réduire les écoulements secondaires entre les aubes. Cependant, elles sont disposées axialement au niveau des aubes. Un décollement peut toutefois s'observer sur la surface extrados de l'aube, à l'approche de son bord de fuite. Ce décollement génère de l'entropie qui réduit le rendement de la turbomachine. La présence d'une pluralité de lamelles réduit la section de passage dans la veine annulaire, ce qui crée des pertes de charges.

Le document GB 1 299 686 divulgue un redresseur axial de turbomachine axiale, conforme au préambule de la revendication 1.

### Résumé de l'invention

### Problème technique

L'invention a pour objectif de résoudre au moins un des problèmes soulevés par l'art antérieur. Plus précisément, l'invention a pour objectif d'améliorer la capacité d'un redresseur à redresser un flux. Plus précisément, l'invention a pour objectif de pouvoir augmenter la pression de sortie d'un redresseur aubagé. L'invention a également pour objectif d'améliorer le rendement d'un compresseur doté d'un redresseur aubagé.

### Solution technique

L'invention a trait à un redresseur axial de turbomachine axiale, comprenant: une rangée annulaire d'aubes statoriques principales s'étendant radialement, chacune desdits aubes comprenant une face de pression et une face de dépression; une série d'aubes statoriques auxiliaires disposées entre les aubes principales; chacune des aubes auxiliaires étant associée à une des aubes principales en s'étendant le long et en aval de la face de pression de l'aube principale associée, à une distance, selon une direction circonférentielle, qui est inférieure à 30% de la distance entre deux aubes principales voisines ; et remarquable en ce que les aubes auxiliaires présentent une hauteur radiale comprise entre 10% et 50% de la hauteur radiale des aubes principales associées.

Selon un mode avantageux de l'invention, les aubes auxiliaires s'étendent essentiellement parallèlement à leurs aubes principales associées, respectivement.

Selon un mode avantageux de l'invention, les aubes auxiliaires chevauchent axialement les aubes principales associées sur une distance C comprise entre 5% et 50%, préférentiellement entre 10% et 30%, de leur longueur axiale.

Selon un mode avantageux de l'invention, le chevauchement axial entre les aubes auxiliaires et les aubes principales associées est limité à la distance C.

Selon un mode avantageux de l'invention, la portion des aubes auxiliaires s'étendant depuis leur bord d'attaque sur 30% de la corde est à hauteur, selon une direction axiale, du bord de fuite des aubes principales associées respectives.

Selon un mode avantageux de l'invention, la longueur de la corde des aubes auxiliaires est inférieure, préférentiellement de 50%, plus préférentiellement de 40%, plus préférentiellement de 30%, à celle des aubes principales associées.

Selon un mode avantageux de l'invention, la corde de chacune des aubes auxiliaires forme un angle α avec la corde des aubes principales associées respectives qui est compris entre 5° et 45°, préférentiellement entre 5° et 20°.

Selon un mode avantageux de l'invention, les aubes auxiliaires sont configurées et positionnées pour générer, lors du fonctionnement de la turbomachine, une dépression au niveau du bord de fuite des aubes principales associées, ladite dépression déviant par aspiration une partie du flux circulant du côté de la face en dépression des aubes principales associées vers ledit bord de fuite.

Selon un mode avantageux de l'invention, chacune des aubes auxiliaires comporte une face de pression et une face de dépression, cette dernière étant en vis-à-vis de la face de pression de l'aube principale associée, la face de dépression de l'aube auxiliaire générant une dépression au niveau du bord de fuite de l'aube principale associée.

Selon un mode avantageux de l'invention, la corde des aubes auxiliaires forme un angle avec la tangente de la face de pression des aubes principales associées au niveau du bord de fuite qui est inférieur à 20°, préférentiellement 15°, plus préférentiellement 10°.

Selon un mode avantageux de l'invention, les aubes auxiliaires chevauchent axialement les aubes principales associées sur une distance C comprise entre 5% et 50%, préférentiellement entre 10% et 30%, de leur longueur axiale.

Selon un mode avantageux de l'invention, les aubes auxiliaires présentent une hauteur radiale comprise entre 15% et 25%, de la hauteur radiale des aubes principales associées.

Selon un mode avantageux de l'invention, chaque aube principale comprend une première portion et une deuxième portion disposées radialement l'une par rapport à l'autre, à hauteur de la deuxième portion la face de pression est d'avantage incurvée axialement qu'au niveau de la première portion, chaque aube auxiliaire s'étendant radialement essentiellement le long de 80% à 120%, préférentiellement de 90% à 110%, de la hauteur radiale de la deuxième portion de l'aube principale associée.

Selon un mode avantageux de l'invention, chaque aube auxiliaire présente une hauteur radiale comprise entre 80% et 120%, préférentiellement entre 90% et 110%, de la hauteur radiale de la deuxième portion de l'aube principale associée.

Selon un mode avantageux de l'invention, le redresseur comprend une paroi annulaire externe et préférentiellement une paroi annulaire interne coaxiales avec la paroi annulaire externe, les aubes principales s'étendant radialement depuis la paroi annulaire externe, les aubes auxiliaires s'étendant radialement depuis la paroi annulaire externe et/ou depuis la paroi annulaire interne.

Selon un mode avantageux de l'invention, les aubes auxiliaires et la paroi annulaire ou une des parois annulaires depuis laquelle lesdites aubes s'étendent, sont venues de matière, préférentiellement en matériau composite ou en matériau métallique.

Selon un mode avantageux de l'invention, une seule aube auxiliaire est associée à chacune des aubes principales.

Selon un mode avantageux de l'invention, une seule aube auxiliaire est présente entre deux aubes principales voisines.

L'invention a également pour objet une turbomachine comprenant un compresseur et/ou une turbine avec au moins un redresseur, caractérisée en ce que le ou au moins un des redresseurs est conforme à l'invention.

Suivant un mode avantageux de l'invention, la surface de chaque aube principale est supérieure à la surface de l'aube auxiliaire.

Suivant un mode avantageux de l'invention, la rangée annulaire d'aubes principales comporte au moins une aube principale différente et/ou différemment agencée par rapport aux autres aubes principales de la rangée.

### Avantages apportés

L'invention permet de réduire et/ou retarder le décrochage d'un flux contournant une aube principale du côté de sa face de dépression. Le décrochage peut être supprimé. L'invention permet ainsi d'augmenter l'appui procuré par les aubes au sein d'un redresseur et la capacité de ce dernier à redresser un flux est améliorée.

Les aubes auxiliaires contribuent indirectement au redressement du flux. Elle apporte son concours à une aube principale en aspirant une partie du flux qui contourne cette dernière par la face de dépression. Elle contribue également de manière directe grâce à sa géométrie et à sa surface propre qui s'étend dans le flux.

Le nombre d'aubes d'un tel redresseur pourra être réduit. Les couloirs entre ses aubes pourront être élargis, ce qui améliore à nouveau le rendement. En plus d'être allégé, ce redresseur sera plus économique à produire.

L'invention permet d'améliorer le rendement d'un compresseur ou d'une turbine munis de tels redresseurs. Une turbomachine dotée d'un tel compresseur et/ou d'une telle turbine présentera une meilleure efficacité.

### Brève description des dessins

La figure 1 représente une turbomachine axiale selon l'invention.
La figure 2 est une vue en coupe d'un compresseur de turbomachine selon l'invention.
La figure 3 est une vue en élévation d'un des redresseurs du compresseur de la figure 1, conforme à l'invention.
La figure 4 présente une aube principale et une aube auxiliaire de redresseur selon l'invention.
La figure 5 représente un redresseur selon l'invention dont les aubes sont vues tangentiellement à la forme annulaire du redresseur.

### Description des modes de réalisation

Dans la description qui va suivre, les termes intérieur ou interne et extérieur ou externe renvoient à un positionnement par rapport à l'axe de rotation d'une turbomachine axiale.

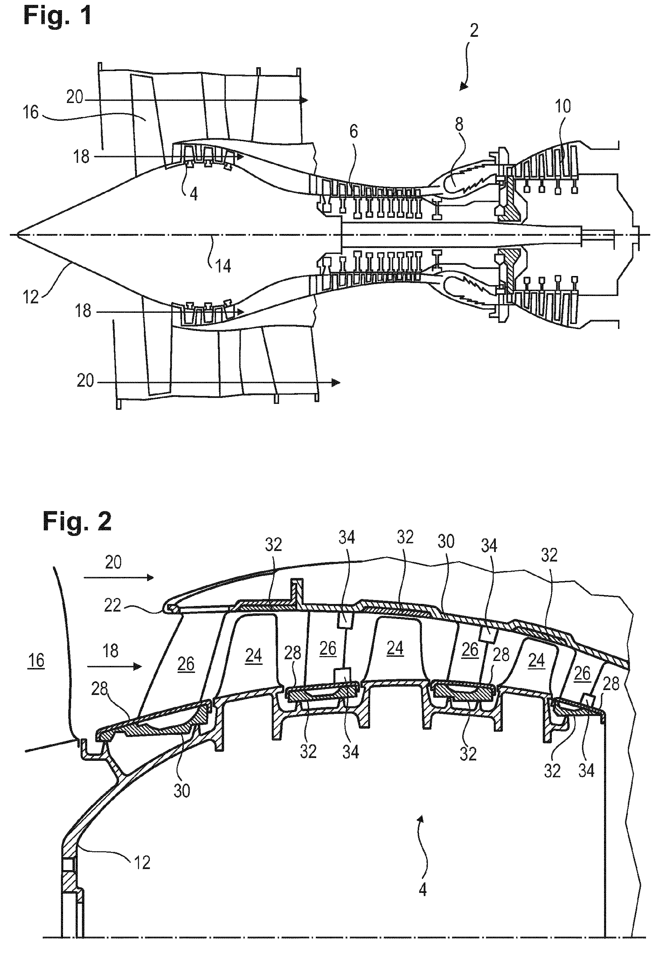

La figure 1 représente de manière simplifiée une turbomachine axiale. Il s'agit dans ce cas précis d'un turboréacteur double-flux. Le turboréacteur 2 comprend un premier niveau de compression, dit compresseur basse-pression 4, un deuxième niveau de compression, dit compresseur haute-pression 6, une chambre de combustion 8 et un ou plusieurs niveaux de turbines 10. En fonctionnement, la puissance mécanique de la turbine 10 transmise via l'arbre central jusqu'au rotor 12 met en mouvement les deux compresseurs 4 et 6. Des moyens de démultiplication peuvent augmenter la vitesse de rotation transmise aux compresseurs. Ou encore, les différents étages de turbines peuvent chacun être reliés aux étages de compresseur via des arbres concentriques. Ces derniers comportent plusieurs rangées d'aubes de rotor associées à des rangées d'aubes de stators. La rotation du rotor autour de son axe de rotation 14 permet ainsi de générer un débit d'air et de comprimer progressivement ce dernier jusqu'à l'entrée de la chambre de combustion 10.

Un ventilateur d'entrée communément désigné fan 16 est couplé au rotor 12 et génère un flux d'air qui se divise en un flux primaire 18 traversant les différents niveaux sus mentionnés de la turbomachine, et un flux secondaire 20 traversant un conduit annulaire (partiellement représenté) le long de la machine pour ensuite rejoindre le flux primaire en sortie de turbine. Les flux primaire 18 et secondaire 20 sont des flux annulaires, ils sont canalisés par le carter de la turbomachine. A cet effet, le carter présente des parois cylindriques ou viroles internes et externes.

La figure 2 est une vue en coupe d'un compresseur basse pression 4 d'une turbomachine axiale 2 telle que celle de la figure 1. On peut y observer une partie du fan 16 et le bec de séparation 22 du flux primaire 18 et du flux secondaire 20. Le rotor 12 comprend plusieurs, en l'occurrence trois rangées d'aubes rotoriques 24.

Le compresseur basse pression 4 comprend plusieurs redresseurs, en l'occurrence quatre, qui contiennent chacun une rangée d'aubes statoriques 26. Les redresseurs sont associés au fan 16 ou à une rangée d'aubes rotoriques pour redresser le flux d'air, de sorte à convertir la vitesse du flux en pression. Chaque réunion d'un redresseur et d'une rangée d'aubes rotoriques forme un étage de compression.

Un redresseur comprend au moins une paroi annulaire, préférentiellement deux parois annulaires, qui sont aptes à guider le flux annulaire primaire 18. Les parois annulaires peuvent être une virole interne 28 ou un carter extérieur 30. Au moins un des redresseurs peut comprendre une, préférentiellement plusieurs couches de matériau abradable 32. Avantageusement, le compresseur comprend des couches de matériau abradable 32 sous chaque virole interne 28 et sur le carter 30 au droit des extrémités externes de chaque rangée d'aubes rotoriques 24.

Les aubes statoriques 26 s'étendent essentiellement radialement depuis le carter extérieur 30 jusqu'à leur virole interne 28 associée. Celle-ci est fixée à l'extrémité intérieure des aubes statoriques 26. Ces dernières sont régulièrement espacés les unes des autres, et présentent une même orientation angulaire dans le flux. Avantageusement, ces aubes sont identiques. Eventuellement, l'espacement entre les aubes statoriques peut varier localement tout comme leur orientation angulaire. Certaines aubes statoriques peuvent être différentes du reste des aubes de la rangée.

Les aubes statoriques 26 sont des aubes statoriques principales 26. Au moins un des redresseurs est muni d'au moins une aube statorique auxiliaire 34, qui est disposée en aval d'une de ses aubes principales 26. Préférentiellement, chaque aube principale 26 d'un même redresseur est munie d'une aube auxiliaire 34. L'ensemble d'aubes auxiliaires 34 d'un redresseur forme une rangée annulaire d'aubes. Préférentiellement encore, tous les redresseurs sont munis d'aubes auxiliaires 34.

Les aubes auxiliaires 34 s'étendent radialement depuis une paroi annulaire (28, 30). Une même aube principale 26 peut être munie de deux aubes auxiliaires 34. L'une s'étend radialement depuis une virole interne 28, l'autre depuis le carter extérieur 30. Les extrémités de ces deux aubes auxiliaires 34 sont distantes l'une de l'autre. Eventuellement, toutes les aubes d'un même redresseur sont munies de deux aubes auxiliaires 34.

Une virole interne 28 et ses aubes auxiliaires 34 peuvent être venues de matière. Une portion de carter extérieur 30 et ses aubes auxiliaires 34 peuvent être venues de matière. A cet effet, le carter extérieur 30 peut être formé de plusieurs viroles extérieures appartenant chacune à un redresseur. Un redresseur peut être segmenté. Un redresseur ou un segment de redresseur peut être venu de matière. Un redresseur ou un segment de redresseur peut être réalisé en matériaux composites et être injecté, ou être en matériaux métalliques et être usiné par électroérosion.

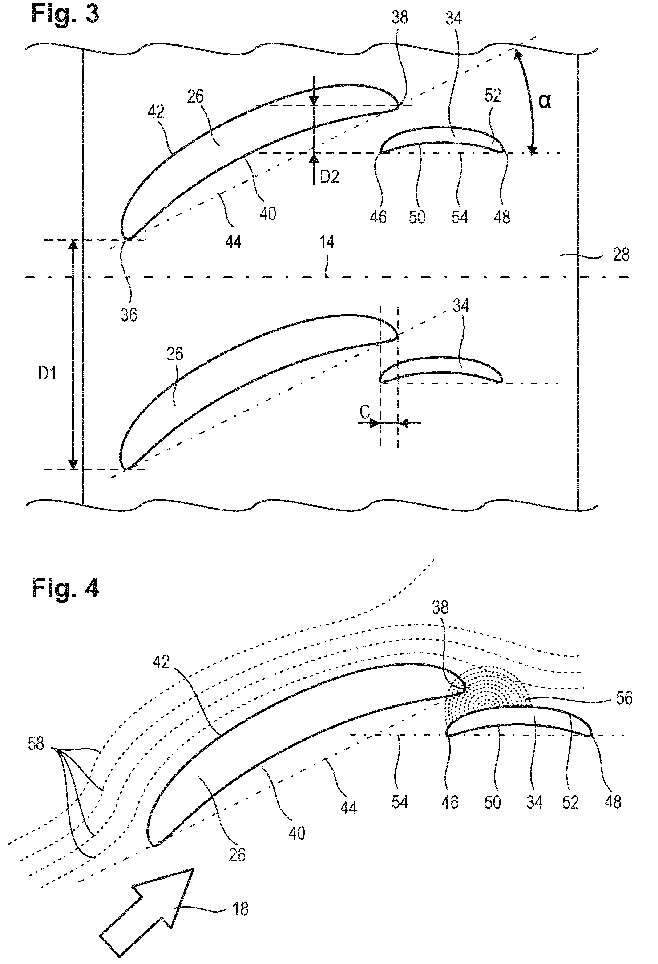

La figure 3 est une vue en élévation d'une portion d'un redresseur du compresseur de la figure 2.

Le redresseur comprend des aubes principales 26 et des aubes auxiliaires 34 qui sont chacune associées à une aube principale 26. Les aubes principales 26 présentent chacune un bord d'attaque 36 et un bord de fuite 38. Elles présentent chacune une face 40 destinée à travailler en pression et une face 42 destinée à travailler en dépression. Ces faces s'étendent du bord d'attaque 36 au bord de fuite 38 de l'aube. Les aubes principales peuvent être cambrées localement ou sur toute leur hauteur. Les cordes 44 des aubes principales 26 sont habituellement inclinées par rapport à l'axe 14 de rotation de la turbomachine.

Les aubes auxiliaires 34 sont disposées axialement à hauteur des bords de fuite 38 des aubes principales 26, entre lesdites aubes. Chacune des aubes auxiliaires 34 est associée à un aube principale 26 en étant disposée au voisinage du bord de fuite 38 de ladite aube. Les aubes auxiliaires 34 présentent chacune un bord d'attaque 46 et un bord de fuite 48. Elles comprennent chacune une face destinée à travailler en pression 50 et une face destinée à travailler en dépression 52. Ces faces s'étendent d'un bord d'attaque 46 à un bord de fuite 48 de l'aube. La face de dépression 52 d'une aube auxiliaire 34 est en regard de la face de pression 40 de l'aube principale 26 associée.

L'écartement entre les aubes principales 26 est supérieur au double de la distance entre une aube principale 26 et une aube auxiliaire 34 associée. La distance D1 entre les bords d'attaque 36 des aubes principales 26 est supérieure au double de la distance tangentielle D2 entre le bord de fuite 38 d'une aube principale 26 et le bord d'attaque 46 d'une aube auxiliaire 34 associée, préférentiellement supérieure au quadruple, plus préférentiellement supérieure au décuple.

Les aubes principales 26 et les aubes auxiliaires 34 se chevauchent axialement. Ce chevauchement axial C est compris entre 1% et 90% de la longueur des aubes auxiliaires 34, préférentiellement compris entre 10% et 60%, plus préférentiellement compris entre 20% et 40%.

Les cordes 54 des aubes auxiliaires 34 sont inclinées par rapport aux cordes 44 des aubes principales 26. L'inclinaison α est comprise entre 1° et 30°, préférentiellement comprise entre 5° et 20°, plus préférentiellement comprise entre 8° et 12°. L'inclinaison des cordes 44 des aubes principales 26 par rapport à l'axe 14 du redresseur est supérieure à l'inclinaison des cordes 54 aubes auxiliaires par rapport à l'axe 14 du redresseur, préférentiellement généralement deux fois supérieure.

La figure 4 représente une aube principale 26 et une aube auxiliaire 34 associée.

L'aube auxiliaire 34 est configurée pour créer une dépression 56 locale dans le flux redressé par le redresseur. Cette dépression 56 occupe un espace en dépression 56 qui s'étend axialement et radialement. Il s'étend radialement sur essentiellement la hauteur de l'aube auxiliaire 34. Il s'étend également tangentiellement jusqu'à la face de pression de l'aube principale 26 et préférentiellement au-delà de la face de dépression de l'aube principale 26. Il s'étend axialement en aval du bord de fuite 38 de l'aube principale 26.

Grâce à cette configuration, le flux primaire 18 issu des aubes de rotor suit davantage la face de dépression 42 de l'aube principale 26. De ce côté, les trajectoires du flux sont représentées à l'aide de lignes de flux 58. Certaines de ces lignes épousent la face de dépression 42 de l'aube principale. Celles qui sont le plus proches de cette face sont mêmes aspirées par l'espace en dépression 56 à l'approche des bords de fuite 38 de l'aube principale 26.

Remarquons que la ligne de flux la plus éloignée de l'aube principale 26 se décole du contour de la face de dépression. Cette ligne de flux n'est pas redressée sur toute la longueur de l'aube principale 26. Il est à préciser qu'en l'absence de l'aube auxiliaire 34, l'ensemble des lignes de flux se décoléraient avant d'atteindre le bord de fuite de l'aube principale 26, ce qui réduirait l'efficacité du redresseur. L'invention permet donc d'améliorer la capacité du redresseur à redresser un flux. Il retarde et/ou réduit les décolements de flux. Eventuellement, il les supprime. Ainsi l'appui de chaque aube principale est amélioré. L'efficacité apportée par chaque aube principale d'un redresseur est accru, si bien qu'il devient possible d'en réduire le nombre. En plus de représenter une économie, cette conséquence permet encore d'améliorer le rendement du redresseur.

Pour générer un espace en dépression 56, l'aube auxiliaire 34 peut présenter différentes particularités. Elle peut présenter une corde 54 qui est inclinée par rapport à la corde de l'aube principale 26, son inclinaison par rapport à l'axe du redresseur étant moins marquée que celle de l'aube principale 26. Afin de créer une dépression tout en participant à redresser le flux, l'aube auxiliaire 34 et/ou sa corde 54 peuvent être généralement parallèles au bord de fuite 38 de l'aube principale 26.

En complément ou en alternative, l'aube auxiliaire 34 peut présenter une cambrure. Son profil peut également montrer une variation d'épaisseur. De la sorte, sa face de pression 50 et sa face de dépression 52 présentent des longueurs significativement différentes. La dépression sera d'autant plus importante sur la face de dépression 52.

L'espace en dépression 56 est généralement généré en partie amont de l'aube auxiliaire 34. Ceci découle du fait qu'à cet endroit le flux subit les accélérations les plus fortes. L'espace en dépression 56 s'étend conventionnellement sur le premier tiers amont de l'aube auxiliaire 34. Il est donc judicieux de disposer les deux aubes l'une par rapport à l'autre de sorte à ce que le bord de fuite 38 de l'aube principale 26 soit implanté axialement dans le premier tiers amont de l'aube auxiliaire 34.

L'espace en dépression 56 peut être généralement symétrique axialement. Par conséquent, le bord de fuite 38 de l'aube principale 26 peut être disposé axialement de sorte à être reculé par rapport au bord d'attaque 46 de l'aube auxiliaire 34 d'un sixième de sa corde. Ainsi, le bord de fuite 38 de l'aube principale 26 sera positionnée au maximum de dépression possible pour une distance D2 donnée.

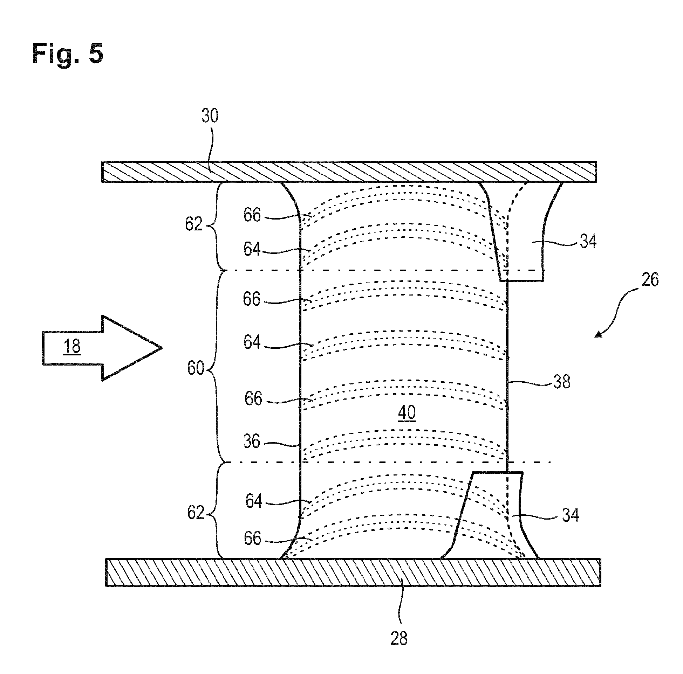

La figure 5 représente un redresseur selon l'invention dont les aubes sont vues tangentiellement à la forme annulaire du redresseur.

Le redresseur présente une aube principale 26 qui s'étend radialement entre la virole interne 28 et le carter 30. Au moins une aube principale 26 du redresseur, préférentiellement toutes les aubes principales du redresseur présentent une première portion 60 et au moins une deuxième portion 62 disposées radialement l'une par rapport à l'autre. La première portion 60 peut être une portion intérieure, et la deuxième portion 62 peut être une portion externe. A hauteur radialement de la ou d'au moins une des deuxièmes portions 62, la face de pression 40 est d'avantage incurvée axialement qu'au niveau de la première portion 60. Cette particularité permet d'éloigner le flux annulaire 18 de la ou des parois de la veine annulaire.

Le caractère incurvé axialement s'observe dans la direction tangentielle en se déplaçant axialement le long de la face de pression 40 de l'aube principale. Eventuellement, la première portion 60 présente des profils 64 dont les fibres neutres 66 sont essentiellement droites. Les fibres neutres 66 des profils 64 de la ou des deuxièmes portions 62 présentent des rayons de courbure moyens inférieurs aux fibres neutres 66 des profils 64 de la première portion 60.

La première portion 60 peut être une portion centrale 60, et la deuxième portion 62 peut être une portion latérale 62. Suivant un mode avantageux de l'invention, chaque aube principale 26 comprend une deuxième portion latérale 62, la portion centrale 60 étant entre les portions latérales. Au niveau des deux portions latérales 62, la face de pression 40 est d'avantage incurvée axialement qu'au niveau de la première portion 60. Les portions latérale 62 sont reliées aux parois annulaires du redresseur.

Les portions latérales 62 sont celles où un décolement de flux sur la face de dépression 40 est le plus susceptibles de se produire. Il est donc judicieux d'y disposer des aubes auxiliaires 34 au droit des bords de fuite 38. Avantageusement, une aube auxiliaire 34 est associée à chaque deuxième portion 62 de chaque aube principale 26 du redresseur. Les aubes auxiliaires 34 s'étendent radialement principalement sur la hauteur de chaque deuxième portion 62. Elles peuvent s'étendre, chacune, le long de 70% à 130%, préférentiellement de 80% à 120%, plus préférentiellement de 90% à 110%, de la hauteur radiale de la deuxième portion 62 associée de l'aube principale associée 26. La hauteur radiale de chaque aube auxiliaire 34 est comprise entre 70% et 130%, préférentiellement entre 80% et 120%, plus préférentiellement entre 90% et 110%, de la hauteur radiale de la deuxième portion 62 associée de l'aube principale 26. Cette particularité vise à optimiser la section de passage dans le flux primaire 18 qui est occupé par les aubes auxiliaires 34 par rapport à l'effet qu'elles produisent.

## Revendications

1. Redresseur axial de turbomachine axiale (2), comprenant :
- une rangée annulaire d'aubes statoriques principales (26) s'étendant radialement, chacune desdites aubes comprenant une face de pression (40) et une face de dépression (42) ;
- une série d'aubes statoriques auxiliaires (34) disposées entre les aubes principales (26) ;
chacune des aubes auxiliaires (34) étant associée à une des aubes principales (26) en s'étendant le long et en aval de la face de pression (40) de l'aube principale associée, à une distance, selon une direction circonférentielle, qui est inférieure à 30% de la distance entre deux aubes principales (26) voisines ; et
**caractérisé en ce que**
les aubes auxiliaires (34) présentent une hauteur radiale comprise entre 10% et 50% de la hauteur radiale des aubes principales associées (26).

2. Redresseur selon la revendication 1, **caractérisé en ce que** les aubes auxiliaires (34) s'étendent essentiellement parallèlement à leurs aubes principales associées (26), respectivement.

3. Redresseur selon l'une des revendications 1 et 2, **caractérisé en ce que** les aubes auxiliaires (34) chevauchent axialement les aubes principales associées (26) sur une distance C comprise entre 5% et 50%, préférentiellement entre 10% et 30%, de leur longueur axiale.

4. Redresseur selon l'une des revendications 1 à 3, **caractérisé en ce que** la longueur de la corde (54) des aubes auxiliaires (34) est inférieure, préférentiellement de 50%, plus préférentiellement de 40%, plus préférentiellement de 30%, à celle des aubes principales (26) associées.

5. Redresseur selon l'une des revendications 1 à 4, **caractérisé en ce que** la corde (54) de chacune des aubes auxiliaires (34) forme un angle α avec la corde (44) des aubes principales (26) associées respectives qui est compris entre 5° et 45°, préférentiellement entre 5° et 20°.

6. Redresseur selon l'une des revendications 1 à 5, **caractérisé en ce que** les aubes auxiliaires (34) sont configurées et positionnées pour générer, lors du fonctionnement de la turbomachine, une dépression (56) au niveau du bord de fuite (38) des aubes principales associées (26), ladite dépression déviant par aspiration une partie du flux circulant du côté de la face en dépression (42) des aubes principales associées (26) vers ledit bord de fuite (38).

7. Redresseur selon l'une des revendications 1 à 6, **caractérisé en ce que** chacune des aubes auxiliaires (34) comporte une face de pression (50) et une face de dépression (52), cette dernière étant en vis-à-vis de la face de pression (40) de l'aube principale associée (26), la face de dépression (52) de l'aube auxiliaire (34) générant une dépression (56) au niveau du bord de fuite de l'aube principale associée (26).

8. Redresseur selon l'une des revendications 1 à 7, **caractérisé en ce que** la corde (54) des aubes auxiliaires (34) forme un angle avec la tangente de la face de pression des aubes principales associées (26) au niveau du bord de fuite (38) qui est inférieur à 20°, préférentiellement 15°, plus préférentiellement 10°.

9. Redresseur selon l'une des revendications 1 à 8, **caractérisé en ce que** les aubes auxiliaires (34) présentent une hauteur radiale comprise entre 15% et 25% de la hauteur radiale des aubes principales associées (26).

10. Redresseur selon l'une des revendications 1 à 9, **caractérisé en ce que** chaque aube principale (26) comprend une première et une deuxième portion (60, 62) réparties radialement, la section transversale de la face de pression (40) présentant sur la deuxième portion (62) un profil davantage cambré que sur la première portion (60), chaque aube auxiliaire (34) s'étendant radialement essentiellement sur 80% à 120%, préférentiellement 90% à 110%, de la hauteur radiale de la deuxième portion de l'aube principale associée (26).

11. Redresseur selon la revendication 10, **caractérisé en ce que** chaque aube auxiliaire (34) présente une hauteur radiale comprise entre 80% et 120%, préférentiellement entre 90% et 110%, de la hauteur radiale de la deuxième portion de l'aube principale associée (26).

12. Redresseur selon l'une des revendications 1 à 11, **caractérisé en ce qu'**il comprend une paroi annulaire externe (30) et préférentiellement une paroi annulaire interne (32) coaxiale avec la paroi annulaire externe, les aubes principales (26) s'étendant radialement depuis la paroi annulaire externe (30), les aubes auxiliaires (34) s'étendant radialement depuis la paroi annulaire externe (30) et/ou depuis la paroi annulaire interne (32).

13. Redresseur selon la revendication 12, **caractérisé en ce que** les aubes auxiliaires (34) et la paroi annulaire ou une des parois annulaires depuis laquelle lesdites aubes s'étendent, sont venues de matière, préférentiellement en matériau composite ou en matériau métallique.

14. Redresseur selon l'une des revendications 1 à 13, **caractérisé en ce qu'**une seule aube auxiliaire (34) est associée à chacune des aubes principales (26).

15. Turbomachine (2) comprenant un compresseur (4, 6) et/ou une turbine (10) avec au moins un redresseur, **caractérisée en ce que** le ou au moins un des redresseurs est conforme à l'une des revendications 1 à 14.

## Patentansprüche

1. Gleichrichter einer axialen Turbomaschine (2), bestehend aus:
- einer ringförmigen Reihe von Hauptleitschaufeln (26), die sich radial erstrecken, wobei die genannten Leitschaufeln eine Druckfläche (40) und eine Unterdruckfläche (42) aufweisen;
- einer Reihe von Hilfsleitschaufeln (34), die zwischen den Hauptleitschaufeln (26) angeordnet sind;
wobei jede der Hilfsleitschaufeln (34) einer Hauptleitschaufel (26) zugeordnet ist und sich entlang und unterhalb der Druckfläche (40) der dazugehörigen Hauptleitschaufel erstreckt und dies in einem Abstand in umlaufender Richtung, der weniger als 30% des Abstands zwischen zwei benachbarten Hauptleitschaufeln (26) beträgt; und
**dadurch gekennzeichnet, dass**
die Hilfsleitschaufeln (34) eine radiale Höhe besitzen, die zwischen 10% und 50% der radialen Höhe der dazugehörigen Hauptleitschaufeln (26) entspricht.

2. Gleichrichter nach Anspruch 1, **dadurch gekennzeichnet, dass** sich die Hilfsleitschaufeln (34) im Wesentlichen parallel zu ihren jeweiligen zugeordneten Hauptleitschaufeln (26) erstrecken.

3. Gleichrichter nach einem der Ansprüche 1 und 2, **dadurch gekennzeichnet, dass** die Hilfsleitschaufeln (34) die zugeordneten Hauptleitschaufeln (26) auf einer Distanz C, die zwischen 5% und 50% und vorzugsweise zwischen 10% und 30% ihrer axialen Länge beträgt, axial überlappen.

4. Gleichrichter nach einem der Ansprüche 1 bis 3, **dadurch gekennzeichnet, dass** die Länge der Kreissehne (54) der Hilfsleitschaufeln (34) vorzugsweise um 50%, noch bevorzugter um 40% und noch bevorzugter um 30% kleiner ist, als diejenige der zugeordneten Hauptleitschaufeln (26).

5. Gleichrichter nach einem der Ansprüche 1 bis 4, **dadurch gekennzeichnet, dass** die Kreissehne (54) jeder der Hilfsleitschaufeln (34) einen Winkel α mit der Kreissehne (44) der jeweils zugeordneten Hauptleitschaufeln (26) bildet, der zwischen 5° und 45° und vorzugsweise zwischen 5° und 20° beträgt

6. Gleichrichter nach einem der Ansprüche 1 bis 5, **dadurch gekennzeichnet, dass** die Hilfsleitschaufeln (34) so konfiguriert und angeordnet sind, dass beim Betrieb der Turbomaschine ein Unterdruck (56) im Bereich der Hinterkante (38) der zugeordneten Hauptleitschaufeln (26) erzeugt wird, welcher mittels Ansaugung einen Teil des Stroms, der auf der Unterdruckseite (42) der zugeordneten Hauptleitschaufeln (26) zirkuliert, zu der genannten Hinterkante (38) ablenkt.

7. Gleichrichter nach einem der Ansprüche 1 bis 6, **dadurch gekennzeichnet, dass** jede der Hilfsleitschaufeln (34) eine Druckfläche (50) und eine Unterdruckfläche (52) beinhaltet, wobei sich letztere gegenüber der Druckfläche (40) der zugeordneten Hauptleitschaufel (26) befindet, wobei die Unterdruckseite (52) der Hilfsleitschaufel (34) einen Unterdruck (56) im Bereich der Hinterkante der zugeordneten Hauptleitschaufel (26) erzeugt.

8. Gleichrichter nach einem der Ansprüche 1 bis 7, **dadurch gekennzeichnet, dass** die Kreissehne (54) der Hilfsleitschaufeln (34) einen Winkel mit der Tangente der Druckseite der zugeordneten Hauptleitschaufeln (26) im Bereich der Hinterkante (38) bildet, der weniger als 20°, vorzugsweise 15%, noch bevorzugter 10° beträgt.

9. Gleichrichter nach einem der Ansprüche 1 bis 8, **dadurch gekennzeichnet, dass** die Hilfsleitschaufeln (34) eine radiale Höhe besitzen, die zwischen 15% und 25% der radialen Höhe der zugeordneten Hauptleitschaufeln (26) beträgt.

10. Gleichrichter nach einem der Ansprüche 1 bis 9, **dadurch gekennzeichnet, dass** jede Hauptleitschaufel (26) einen ersten und einen zweiten Abschnitt (60, 62) aufweist, die radial verteilt sind; wobei der querliegende Abschnitt der Druckseite (40) auf dem zweiten Abschnitt (62) ein Profil aufweist, das stärker gebogen ist, als der erste Abschnitt (60), wobei sich jede Hilfsleitschaufel (34) im wesentlichen radial auf 80% bis 120%, vorzugsweise auf 90% bis 110% der radialen Höhe des zweiten Abschnitts der zugeordneten Hauptleitschaufel (26) erstreckt.

11. Gleichrichter nach Anspruch 10, **dadurch gekennzeichnet, dass** jede Hilfsleitschaufel eine radiale Höhe aufweist, die zwischen 80% und 120%, vorzugsweise zwischen 90% und 110% der radialen Höhe des zweiten Abschnitts der zugeordneten Hauptleitschaufel (26) beträgt.

12. Gleichrichter nach einem der Ansprüche 1 bis 11, **dadurch gekennzeichnet, dass** er eine ringförmige äußere Wandung (30) und vorzugsweise eine innere ringförmige Wandung (32) aufweist, die sich koaxial zur äußeren ringförmigen Wandung verhält, wobei sich die Hauptleitschaufeln (26) radial von der ringförmigen äußeren Wandung (30) erstrecken und sich die Hilfsleitschaufeln (34) radial von der äußeren ringförmigen Wandung (30) und/oder von der inneren ringförmigen Wandung (32) aus erstrecken.

13. Gleichrichter nach Anspruch 12, **dadurch gekennzeichnet, dass** die Hilfsleitschaufeln (34) und die ringförmige Wandung oder eine der ringförmigen Wandungen, von denen aus sich die genannten Leitschaufeln erstrecken, aus einem Material bestehen, vorzugsweise aus Verbundmaterial oder aus Metall.

14. Gleichrichter nach einem der Ansprüche 1 bis 13, **dadurch gekennzeichnet, dass** eine einzige Hilfsleitschaufel (34) jeder der Hauptleitschaufeln (26) zugeordnet ist.

15. Turbomaschine (2) mit einem Kompressor (4, 6) und/oder einer Turbine (10) mit mindestens einem Gleichrichter, **dadurch gekennzeichnet, dass** der Gleichrichter oder mindestens einer der Gleichrichter einem der Ansprüche 1 bis 14 entspricht.

## Claims

1. Axial stator of an axial turbo compressor (2), comprising:
- an annular row of main stator blades (26) extending radially, each of the said blades having a pressure surface (40) and a suction surface (42);
- a series of auxiliary stator blades (34) located between the main blades (26);
wherein
each of the auxiliary blades (34) is associated with one of the main blades (26) extending along and downstream of the pressure face (40) of the associated main blade, at a distance, in a circumferential direction, which is less than 30% of the distance between two adjacent main blades (26);
**characterized in that**
the auxiliary blades (34) have a radial height ranging between 10% and 50% of the radial height of the associated main blades (26).

2. Axial stator in accordance with Claim 1, **characterized in that** the auxiliary blades (34) extend substantially parallel to their associated main blades (26), respectively.

3. Axial stator in accordance with Claims 1 and 2, **characterized in that** the auxiliary blades (34) axially overlap the associated main blades (26) over a distance C between 5% and 50%, preferably between 10% and 30%, of their axial length.

4. Axial stator in accordance with Claims 1 to 3, **characterized in that** the chord length (54) of each auxiliary blade (34) is smaller, preferably 50%, more preferably 40%, more preferably 30% than that of its associated main blade (26).

5. Axial stator in accordance with Claims 1 to 4, **characterized in that** the chord (54) of each auxiliary blade (34) forms an angle α with the chord (44) of its associated respective main blade, which is between 5° and 45°, preferably between 5° and 20°.

6. Axial stator in accordance with Claims 1 to 5, **characterized in that** each auxiliary blade (34) is positioned and configured to generate, during the turbomachine's operation, a low-pressure area (56) at the trailing edge (38) of the associated main blade (26), the said negative pressure deflecting by suction a part of the circulating flow from the suction face (42) of the associated main blade (26) towards the said trailing edge (38).

7. Axial stator in accordance with one of Claims 1 to 6, **characterized in that** each auxiliary blade (34) has a pressure face (50) and a suction face (52), this latter being opposite the pressure face (40) of the associated main blade (26), the suction face (52) of the auxiliary blade (34) generating a low-pressure area (56) at the trailing edge of the associated main blade (26).

8. Axial stator in accordance with one of Claims 1 to 7, **characterized in that** the chord (54) of each auxiliary blade (34) forms an angle with the tangent to the pressure face of its associated main blade (26) at the associated trailing edge (38) which is less than 20°, preferably 15°, more preferably 10°.

9. Axial stator in accordance with one of Claims 1 to 8, **characterized in that** the auxiliary blades (34) have a radial height ranging between 15% and 25% of the radial height of the associated main blades (26).

10. Axial stator in accordance with one of Claims 1 to 9, **characterized in that** each main blade (26) comprises a first and a second part (60, 62) radially divided, the cross section of the pressure face (40) of the second part (62) being more curved than the first part (60), each auxiliary blade (34) extending radially essentially from 80% to 120%, preferably 90% to 110% of the radial height of the second part of the associated main blade (26).

11. Axial stator in accordance with Claim 10, **characterized in that** each auxiliary blade (34) has a radial height between 80% and 120%, preferably between 90% and 110% of the radial height of the second part of the associated main blade (26).

12. Axial stator in accordance with one of Claims 1 to 11, **characterized in that** it comprises a annular outer wall (30) and preferably an inner annular wall (32) coaxial with the outer annular wall, the main blades (26) extending radially from the outer annular wall (30), the auxiliary blades (34) extending radially from the outer annular wall (30) and/or from the inner annular wall (32).

13. Axial stator in accordance with Claim 12, **characterized in that** the auxiliary blades (34) and the annular wall, or one of the annular walls, from which the said blades extend are formed integrally, preferably made of a composite material or a metallic material.

14. Axial stator in accordance with one of Claims 1 to 13, **characterized in that** a single auxiliary blade (34) is associated with each of the main blades (26).

15. Turbomachine (2) comprising a compressor (4, 6) and/or a turbine (10) with at least one stator, **characterized in that** the or at least one of the stators is in accordance with one of Claims 1 to 14.
